# EUROPEAN PATENT APPLICATION

(11) **EP 4 219 423 A1**
(43) Date of publication of application: **02.08.2023**
(21) Application number: 22305083.2
(22) Date of filing: 27.01.2022
(51) Int. Cl.: C04B 24/16, C04B 24/24, C04B 24/26, C04B 28/08, C04B 103/30

(54) **READY-MIX CONCRETE OR MORTAR, OR PRECAST CONCRETE COMPOSITION, COMPRISING GROUND GRANULATED BLAST FURNACE SLAG, AN ALKALI SULFATE ACTIVATOR AND A PCE TYPE WATER REDUCING POLYMER**

(71) Applicant: Ecocem Materials Limited, Dublin 3 D03E0C0 (IE); Ecole Normale Supérieure Paris-Saclay, 91190 Gif-sur-Yvette (FR); CENTRE NATIONAL DE LA RECHERCHE SCIENTIFIQUE (CNRS), 75016 Paris (FR)
(72) Inventor: FROUIN, Laurent, 75012 PARIS (FR); ALFANI, Roberta, DUBLIN, D03 E0CO (IE); CHAOUCHE, Mohend, 91190 GIF SUR YVETTE (FR); PLANK, Johann, 80805 MUNICH (DE); LEI, Lei, 85375 Neufahrn bei Freising (DE)
(74) Representative: Plasseraud IP

(57) **Abstract**

The invention concerns a ready-mix concrete or mortar, or precast concrete composition, devoted in particular to building construction and civil engineering works, comprising at least one aggregate (A), a binder composition (B), at least one alkali sulfate activator (C), water (D) and at least one water reducing polymer (E), wherein the binder composition (B) comprises:
(b1)Ground Granulated Blast Furnace Slag (GGBS),
(b2) optionally at least one hydraulic binder other than GGBS, according to standard EN 197-1 and EN 197-5,
(b3) optionally one or more supplementary cementitious materials, and
(b4) optionally one or more filler materials,
wherein the water reducing polymer (E) is a copolymer comprising the following monomeric units:
- units A 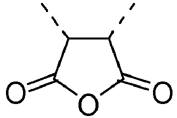 - units B 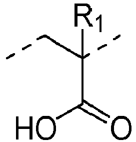 - units C 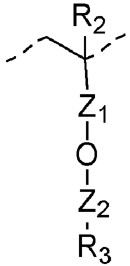 - units D 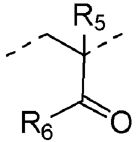 wherein: - - - represents a bonding site of a monomeric unit
the quantity of monomeric units A is between 0 and 40 mol%,
the quantity of monomeric units B is between 25 and 95 mol%,
the quantity of monomeric units C is between 5 and 50 mol%,
the quantity of monomeric units D is between 0 and 25 mol%, and
wherein said ready-mix concrete or mortar, or precast concrete composition is classified in one of the classes S3, S4 and S5 according to standard NF EN 206.

## Description

### Technical Field

The technical field of the invention relates to ready-mix concrete or mortar composition or precast concrete compositions comprising at least one alkali sulfate which provide an accelerating effect and at least one water reducing polymer fluidifying effect.

More particularly, the invention relates to low carbon binders comprising Ground Granulated Blast Furnace Slag (GGBS) activated with an alkali sulfate activator for ready-mix concrete or mortar, or precast concrete composition comprising a water reducing polymer.

### Background Art

Supplementary cementitious materials (SCMs), for instance mortars and concretes containing significant amounts of Ground Granulated Blast furnace Slag (GGBS), are being increasingly used since ordinary Portland cement production has a strong and negative impact on the environment due to the emissions of large quantities of carbon dioxide. The production of cement inherently generates CO₂ during the calcination of the raw materials at very high temperature (1450°C) in a kiln through decarbonation of the limestone (Eq. (1)):

CaCO₃ (s) → CaO (s) + CO₂ (g) (Eq. (1))

In addition, carbon dioxide is released as a result of the combustion of the fossil fuels needed to heat the cement kiln. By adding the additional emissions of grinding, almost one ton of CO₂ per ton of Portland cement is obtained. Overall, the cement industry is responsible for about 7 to 9% of the global carbon dioxide emissions.

Moreover, it is generally necessary to add an accelerator in said binders containing significant amounts of SCMs in order to produce mortar or concrete having the desired early-age mechanical properties. Activating agents are often used in order to accelerate the strength development of these alternative binders. Activating agents are compounds which induce alkaline conditions favorable to the strength development of SCM-containing binders. Activating agents are compounds which most commonly have sodium or potassium as their cation and hydroxide, silicate, sulfate, thiocyanate or carbonate as their anion. Low carbon alkali activated binders, comprising GGBS and other SCMs, such as metakaolin, clay (calcinated or not), pozzolanic materials. exhibit rheology problems, in terms of initial fluidity and open time which do not correspond to the required rheology for having a good processability during a sufficient time. This is mainly due to the addition of alkali activation and the presence of high soluble sulfate in the solution after water addition.

Examples of alkali activation are salts, like sodium sulfate. Some anhydrites, especially the very soluble ones, can lead to an high and fast presence of soluble sulfate in the poral solution, leading to the same rheology problems, as in presence of alkali salts. These anhydrites (mainly thermal ones) are characterized by high conductivity, high pH and high zeta potential.

Nevertheless, the addition of alkali and soluble sulfate enables to boost initial strengths and to achieve compressive strengths values on low carbon binder-based compositions comparable with 100% OPC compositions.

Water reducing polymer are used to increase the fluidity of a concrete in view of the desired consistence class, as defined in standard NF EN 206. Ordinary water reducing agents, also called plasticizers/superplasticizers, like lignosulfonate polymers, melamine sulfonate polymers, naphthalene sulfonate polymers, polycarboxylic acid ether polymers (PCE), polyoxyethylene phosphonates, phosphates, vinyl copolymers, are not so effective when alkali sulfate activation is added to the composition.

Generally, the water reducing polymer cannot play its role and the concrete or mortar is not as fluid and workable as expected, because alkali sulfate salts generally reduce polymer solubility by decreasing its efficiency.

Patent application WO 2021/204384 A1 discloses performance additives which are composed of at least one alkaline activating agent comprising a kosmotropic ion, at least one water-reducing polymer, and at least one salt comprising a chaotropic ion, which accelerate the hydration of binders and increase their fluidity. The chaotropic ion enables to manage the fluidity of the systems and its open time, following the addition of alkaline accelerator (kosmotropic ion).

The addition of chaotropic ion is actually a very efficient solution to the problem of inactivation of the ordinary water reducing agents induced by soluble/solubilized sulfates, in concrete and mortars comprising alkali activated low carbon binders. Nevertheless, it is difficult to be implemented on job site, because this solution involves some changes in the usual processing.

Hence, it would be beneficial to have a solution different from the above mentioned one, which could be suitable for all kinds of alternative binder compositions made with SCMs and activating agents.

In this context, the invention aims at addressing at least one of the above problems and/or needs, through fulfilling at least one of the following objectives:
-O1- Providing ready-mix concrete or mortar composition or precast concrete composition comprising alternative binder compositions made with SCMs and activated with an activating agent, fluidified with at least one common water reducing polymer.
-O2- Providing GGBS containing and low carbon ready-mix concrete or mortar composition or precast concrete compositions with appropriate rheology in the wet state, before setting, and with good mechanical properties after setting, especially good early age strength.
-O3- Providing an efficient process for fluidifying wet GGBS containing and low carbon concrete or industrial mortar compositions before setting and for accelerating strength development after said setting, wherein said compositions include at least one alkaline sulfate accelerator.
**-O4-** Providing a method for fluidifying binder compositions including GGBS and possibly, other supplementary cementitious materials, and/or filler materials and for fluidifying wet mortars and concretes

### Summary

In a first aspect, the invention concerns a wet ready-mix concrete or mortar composition, or a wet precast concrete composition, devoted in particular to building construction and civil engineering works, comprising at least one aggregate (A), a binder composition (B), at least one alkali and/or earth alkali sulfate activator (C), water (D) and at least one water reducing polymer (E), wherein the binder composition (B) comprises:
(b1) Ground Granulated Blast Furnace Slag (GGBS),
(b2) optionally at least one hydraulic binder other than GGBS, according to standard EN 197-1 and EN 197-5,
(b3) optionally one or more supplementary cementitious materials, and
(b4) optionally one or more filler materials,
wherein said wet ready-mix concrete or mortar composition, or wet precast concrete composition is classified in one of the slump flow classes S3, S4 and S5 according to standard NF EN 206, and wherein the water reducing polymer (E) is a copolymer comprising the following monomeric units:
- units A 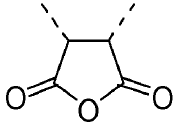
- units B 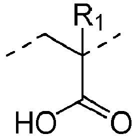
- units C 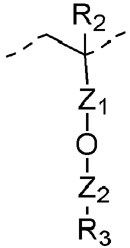
- units D 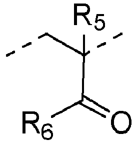 wherein: - - - represents a bonding site of a monomeric unit
   the quantity of monomeric units A is between 0 and 40 mol%,
   the quantity of monomeric units B is between 25 and 95 mol%,
   the quantity of monomeric units C is between 5 and 50 mol%,
   the quantity of monomeric units D is between 0 and 25 mol%,
   R₁ and R₂ are independently hydrogen or methyl,
   Z₁ is a bond, a methyl or an ethyl,
   Z2 is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S.

In a second aspect, the invention concerns a process for preparing wet concrete composition or wet mortar composition classified in one of the slump flow classes S3, S4 and S5 according to standard NF EN 206, comprising a step of introducing in a mixing chamber, simultaneously or not, separately or not:
at least one aggregate (A),
   - a binder composition (B),
   - at least one alkali sulfate activator (C),
   - water (D) and
   - at least one water reducing polymer (E),
wherein the binder composition (B) comprises:
   (b1) Ground Granulated Blast Furnace Slag (GGBS),
   (b2) optionally at least one hydraulic binder other than GGBS, according to standard EN 197-1 and EN 197-5,
   (b3) optionally one or more supplementary cementitious materials, and
   (b4) optionally one or more filler materials,
wherein the water reducing polymer (E) is a copolymer comprising the following monomeric units:
   - units A 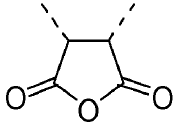
   - units B 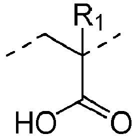
   - units C 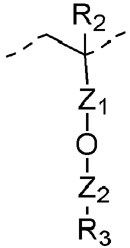
   - units D 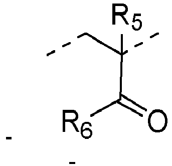
wherein: - - - represents a bonding site of a monomeric unit
   the quantity of monomeric units A is between 0 and 40 mol%,
   the quantity of monomeric units B is between 25 and 95 mol%,
   the quantity of monomeric units C is between 5 and 50 mol%,
   the quantity of monomeric units D is between 0 and 25 mol%,
   R₁ and R₂ are independently hydrogen or methyl,
   Z₁ is a bond, a methyl or an ethyl,
   Z₂ is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S, and wherein said wet concrete or wet industrial mortar composition remain classified in same the slump flow class during at least 2 hours after having introduce all the quantities of A, B, C , D and E in the mixing chamber.

In a third aspect, the invention concerns a method for maintaining a wet concrete composition or a wet industrial mortar composition in a single slump flow class according to standard NF EN 206, during a time period of at least 2 hours, said composition comprising at least one aggregate (A), a binder composition (B), at least one alkali sulfate activator (C), water (D) and at least one water reducing polymer (E), wherein the binder composition (B) comprises:
(b1) Ground Granulated Blast Furnace Slag (GGBS),
(b2) optionally at least one hydraulic binder other than GGBS, according to standard EN 197-1 and EN 197-5,
(b3) optionally one or more supplementary cementitious materials, and
(b4) optionally one or more filler materials,
wherein the water reducing polymer (E) is a copolymer comprising the following monomeric units:
- units A 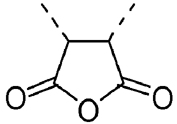
- units B 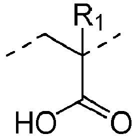
- units C 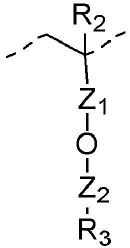
- units D 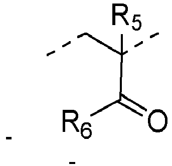
wherein: - - - represents a bonding site of a monomeric unit
the quantity of monomeric units A is between 0 and 40 mol%,
the quantity of monomeric units B is between 25 and 95 mol%,
the quantity of monomeric units C is between 5 and 50 mol%,
the quantity of monomeric units D is between 0 and 25 mol%,
R₁ and R₂ are independently hydrogen or methyl,
Z₁ is a bond, a methyl or an ethyl,
Z₂ is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S,
wherein the time period of at least 2 hours begins when all the quantities of A, B, C , D and E have been introduced in a mixing chamber, and
wherein the single slump flow class is S3, S4 or S5.

In a fourth aspect, the invention concerns a method for providing a hardened low carbon GGBS containing binder-based concrete or mortar composition,
an early-age compressive strength value,
comparable with the one of a hardened 100% OPC binder-based concrete or mortar composition; wherein a wet precursor P1 of the low carbon GGBS containing binder-based concrete or mortar composition comprises at least one aggregate (A), a binder composition (B), at least one alkali sulfate activator (C), water (D) and at least one water reducing polymer (E),
wherein the binder composition (B) comprises:
   (b1) Ground Granulated Blast Furnace Slag (GGBS),
   (b2) optionally at least one hydraulic binder other than GGBS, according to standard EN 197-1 and EN 197-5,
   (b3) optionally one or more supplementary cementitious materials, and
   (b4) optionally one or more filler materials,
   wherein said wet precursor P1 is classified in one of the slump flow classes S3, S4 and S5 according to standard NF EN 206, and,
wherein said wet P1 remains classified in the same slump flow class during at least 2 hours after having introduced in a mixing chamber all the quantities of the components A, B, C, D and E,
wherein a wet precursor P2 of the 100% OPC binder-based concrete or mortar composition comprises the same components (A), (D), (E) as P1, the same concentrations of (A), 100% OPC ,(D) and (E) as (A), (B) ,(D) and (E) of P1, and the same ratio C/100% OPC binder as the ratio C/B of P1 ;
said method consisting in using a water reducing polymer (E) is a copolymer comprising the following monomeric units:
   - units A 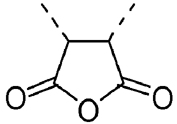
   - units B 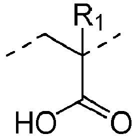
   - units C 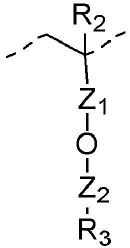 units D 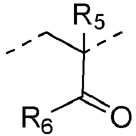
wherein: - - - represents a bonding site of a monomeric unit
   the quantity of monomeric units A is between 0 and 40 mol%,
   the quantity of monomeric units B is between 25 and 95 mol%,
   the quantity of monomeric units C is between 5 and 50 mol%,
   the quantity of monomeric units D is between 0 and 25 mol%,
   R₁ and R₂ are independently hydrogen or methyl,
   Z₁ is a bond, a methyl or an ethyl,
   Z₂ is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S.

### General definitions

According to the terminology of this text, the following non limitative definitions have to be taken into consideration:
"binder" refers to a material composed of one or more hydraulic binders and possibly one or more supplementary cementitious material and possibly one or more filler material.
"hydraulic binder" refers to a material that hardens through its reaction with water. Here the term refers to pure ordinary Portland cement and normalized cements made with, calcium aluminate cement, calcium sulfoaluminate cement, belite cement, ground granulated blast furnace slag, basic oxygen furnace slag, ladle slag, super sulfated cement, hydraulic lime, cement kiln dust, or a mixture thereof.
"supplementary cementitious material" refers to a material which contributes to the strength of a binder through latent hydraulic or pozzolanic activity. Here the term refers to ground granulated blast furnace slag, fly ash, activated clay, silica fume, basic oxygen furnace slag, natural pozzolanic materials, rice husk ash, activated recycled concrete fine aggregates or a mixture thereof.
"filler material" refers to a material whose primary role in a binder is physical rather than chemical. Fillers occupy pore spaces and are used as substitutes for hydraulic binders and supplementary cementitious materials as they are less energy intensive. Here the term refers to ground limestone, ground dolomite, marble powder, siliceous sands, recycled concrete fine aggregates or a mixture thereof.
"slag" denotes a stony waste matter separated from metals during the smelting or refining of ore.
"*GGBS*" or "GGBFS": Ground Granulated Blast Furnace Slag, which is equivalent to blast furnace slag, Granulated Blast Furnace Slag (GBFS), blast furnace water-crushed slag powder and blast furnace slag fine aggregate.
*"cement"* is understood as meaning a powder substance made for use in making mortar or concrete. It is a mineral binder, possibly free from any organic compound. It includes ordinary Portland cement, Portland-slag cements, Portland-silica fume cements, Portland-pozzolana cements, Portland-fly ash cements, Portland-burnt shale cements, Portland-limestone cements, Portland-composite cements, Blast furnace slag cements, super sulfated cements, calcium aluminate cements, Pozzolanic cements, and composite cements.
*"mortar"* refers to a material composed of binder(s) and aggregates such as sand.
*"concrete"* refers to a material composed of binder(s) and aggregates such as sand and (fine) gravel.
*"Dry weight"* is the weight of material in its natural state (without adding of water or another solutions from outside).
"Apparent viscosity" is the shear stress applied to a fluid divided by the shear rate, it is used to express the viscosity of non-Newtonian fluids where the viscosity depends on the shear rate, in International System (IS) units, apparent viscosity is expressed in Pascal seconds (Pa.s).
"CEM X", represents the class of cement according to standard EN 197-1 and EN 197-5.
"open time" is the length of time for which a mortar or a concrete is processable.
"early-age strength" corresponds to the mechanical strength of a mortar or concrete in the first 24 hours after the mixing of all the components of said mortar or concrete.
"comparable" means that the difference between two values is of at most 10%.
"soluble" when referring to sulfate or anhydrite means that when said sulfate or anhydrite is solubilized in water at a concentration of 10g/L the resulting solution has a pH of at least 10.
"poral solution" correspond to the intersticial solution liquid phase inside the pores.

### Brief Description of Drawings

**Fig. 1**

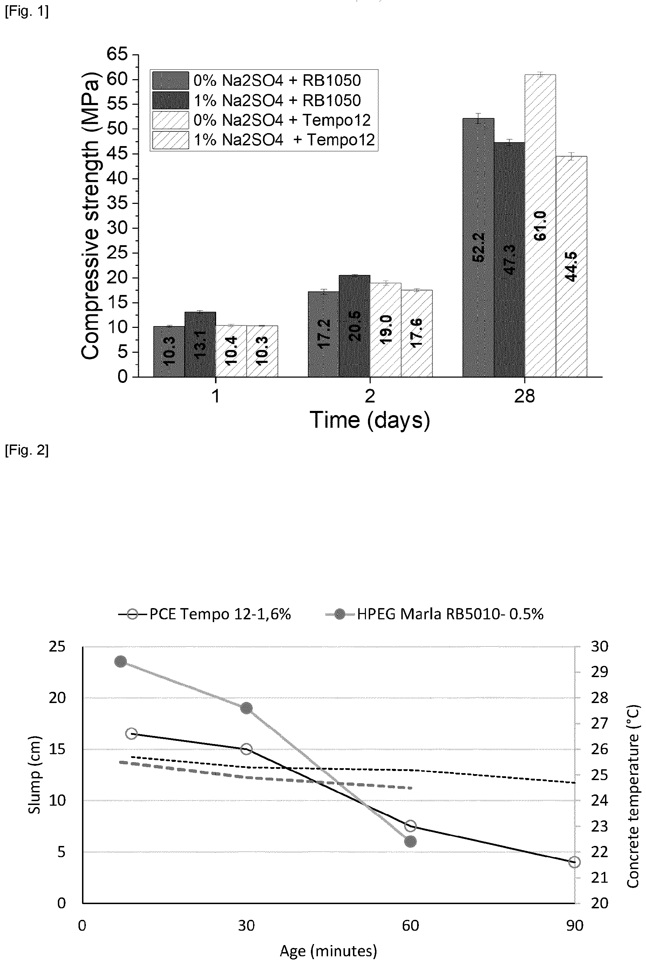

   [Fig. 1] Figure 1 is a bar diagram of compressive strength in function of time.
**Fig. 2**
   [Fig. 2] Figure 2 is a graphic reporting Abrams cone for two CEM III / B concretes with the addition of 1.5% Na₂SO₄ and admixture either with 1.6% of Tempo 12 (traditional PCE, in black), or with 0.5% of Marla RB 1050. Figure 2 shows results of rheology measurements, done by Abrams cone for precast application. Room temperature was higher (25-26°C) than normal lab conditions in order to simulate worse conditions for precast applications.
**Fig. 3**

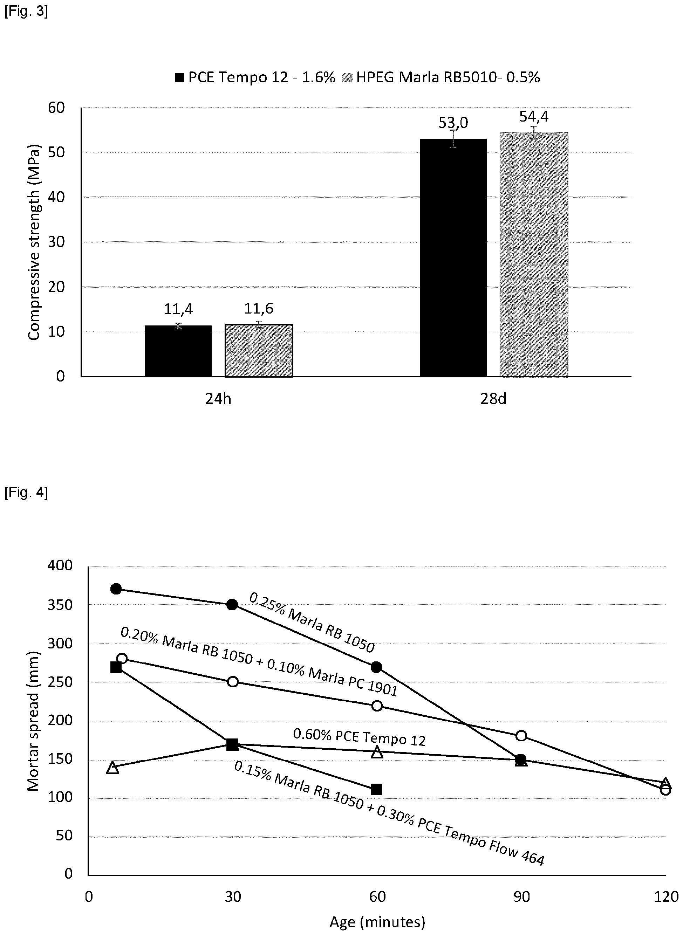

   [Fig. 3] Figure 3 is a bar diagram of compressive strength in function of time.
**Fig. 4**
   [Fig. 4] Figure 4 is a graphic representing spreading with an Abrams mini-cone on MBE based on CEM III / B with the addition of 1.5% Na₂SO₄ and adjuvanted by different combinations of superplasticizers.
**Fig. 5**

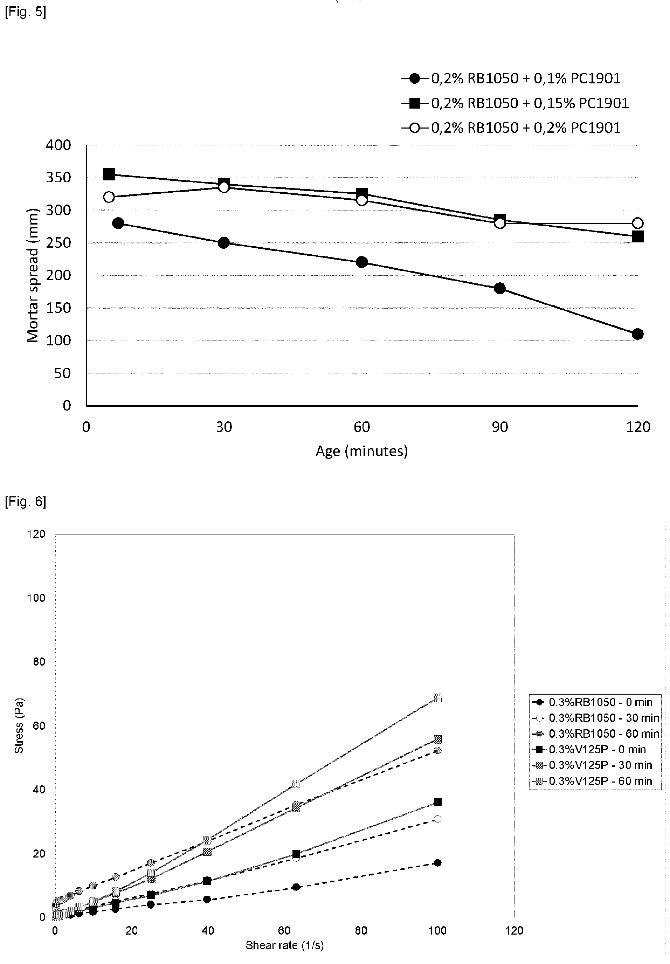

   [Fig. 5] Figure 5 is a graphic representing spreading with an Abrams mini-cone on MBE based on CEM III / B with the addition of 1.5% Na2SO4 and adjuvanted by different combinations of superplasticizers.
**Fig. 6**
   [Fig. 6] Figure 6 is a graphic representing stress vs shear rate measurements for HPEG PCEs in the presence of sodium sulfate.

### Detailed description of the invention

### The ready-mix concrete or mortar or precast concrete composition

The wet ready-mix concrete or mortar composition, or wet precast concrete composition, devoted in particular to building construction and civil engineering works, comprises at least one aggregate (A), a binder composition (B), at least one alkali sulfate activator (C), water (D) and at least one water reducing polymer (E), wherein the binder composition (B) comprises:
(b1) Ground Granulated Blast Furnace Slag (GGBS),
(b2) optionally at least one hydraulic binder other than GGBS, according to standard - EN 197-1 and EN 197-5,
(b3) optionally one or more supplementary cementitious materials, and
(b4) optionally one or more filler materials,
wherein said wet ready-mix concrete or mortar composition, or wet precast concrete composition is classified in one of the slump flow classes S3, S4 and S5 according to standard NF EN 206, and wherein the water reducing polymer (E) is a copolymer comprising the following monomeric units:
- units A 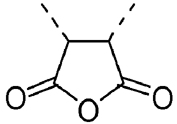
- units B 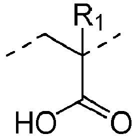
- units C 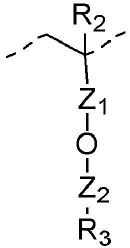 units D

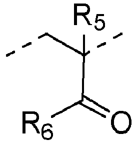

wherein: - - - represents a bonding site of a monomeric unit
the quantity of monomeric units A is between 0 and 40 mol%,
the quantity of monomeric units B is between 25 and 95 mol%,
the quantity of monomeric units C is between 5 and 50 mol%,
the quantity of monomeric units D is between 0 and 25 mol%,
R₁ and R₂ are independently hydrogen or methyl,
Z₁ is a bond, a methyl or an ethyl,
Z₂ is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.

Advantageously, said wet ready-mix concrete or mortar composition remains classified in the same slump flow class during at least 2 hours after having added all the quantities of the water D.

### The aggregate (A)

Aggregates comprise a large category of particulate material used in construction, including sands, gravels, crushed stones, slag (not-granulated), recycled concrete and geosynthetic aggregates. They serve as reinforcement to add strength to the overall composite material.

In addition of the above cited aggregates, the ready-mix composition can also include fillers, for example based on quartz, limestone, or clays and mixtures thereof as well as light fillers, such as perlites, diatomaceous earth, expanded mica (vermiculite) and foamed sand, and mixtures thereof.

The total content of these fillers is preferably comprised between 0,1% and 10% by weight of the total weight of the aggregate (A).

### The binder composition (B)

According to the invention, the binder composition (B) comprises:
(b1) Ground Granulated Blast Furnace Slag (GGBS),
(b2) optionally at least one hydraulic binder other than GGBS, according to standard EN 197-1 and EN 197-5,
(b3) optionally one or more supplementary cementitious materials, and
(b4) optionally one or more filler materials

The binder composition (B) could be made of 100% of GGBS (b1). In some embodiments, the binder composition (B) comprises also at least one hydraulic binder other than GGBS, according to standard EN 197-1 and EN 197-5 (b2). In these embodiments, the content of b2 is comprised between 0,1% and 60% by weight of the total weight of the binder composition (B), preferably between 3% and 55% by weight of the total weight of the binder composition (B), and more preferably between 5% and 50% by weight of the total weight of the binder composition (B).

In some embodiments, the ready-mix concrete or mortar, or precast concrete composition according to the invention, comprises supplementary cementitious material (b3). Advantageously, b3 is selected from the group consisting of fly ash, mechanically or thermally activated clay, silica fume, natural pozzolanic materials, rice husk ash, or mixtures thereof. In these embodiments, the content of b3 is comprised between 0,1% and 90% by weight of the total weight of the binder composition (B), preferably between 5% and 80% by weight of the total weight of the binder composition (B), and more preferably between 10% and 70% by weight of the total weight of the binder composition (B).

In some embodiments, the ready-mix concrete or mortar, or precast concrete composition according to the invention, comprises one or more filler material (b4). Advantageously, b4 is selected from the group consisting of ground limestone, ground dolomite, marble powder, siliceous sands, recycled concrete fine aggregates or a mixture thereof. In these embodiments, the content of b4 is comprised between 0,1% and 60% by weight of the total weight of the binder composition (B), preferably between 3% and 55% by weight of the total weight of the binder composition (B), and more preferably between 5% and 50% by weight of the total weight of the binder composition (B).

In some embodiments, the ready-mix concrete or mortar, or precast concrete composition according to the invention, comprises at least one hydraulic binder other than GGBS, according to standard EN 197-1and EN 197-5 (b2) and/or supplementary cementitious material (b3), and/or one or more filler material (b4). In other words, the binder composition (B) could be a mixture of GGBS (b1), at least one hydraulic binder other than GGBS, according to standard EN 197-1 and EN 197-5 (b2) and supplementary cementitious material (b3) or a mixture of GGBS (b1), at least one hydraulic binder other than GGBS, according to standard EN 197-1 and EN 197-5 (b2) and one or more filler material (b4) or a mixture of GGBS (b1), supplementary cementitious material (b3) and one or more filler material (b4) or a mixture of GGBS (b1), at least one hydraulic binder other than GGBS, according to standard EN 197-1 and EN 197-5 (b2), supplementary cementitious material (b3) and one or more filler material (b4). In these embodiments, the total content of b1 is comprised between 20% and 95% by weight of the total weight of the binder composition (B), preferably between 30% and 90% by weight of the total weight of the binder composition (B), and more preferably between 50% and 80% by weight of the total weight of the binder composition (B).

In some embodiments, the binder composition (B) is advantageously enriched with one or several other components which are ingredients, notably functional additives preferably selected in the following list:

### Water retention agent

A water retention agent has the ability to retain the mixing water before setting. The water is so trapped in the wet paste formulation which improves its bond. To some extent, the water is less absorbed by the support.

The water retention agent is preferably chosen from the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

### Rheological agent

The possible rheological agent (also named a "thickener") is preferably chosen from the group comprising, more preferably consisting in: clays, starch ethers, cellulose ethers and/or gums (e.g. welan gum xanthan, diutan gum, succinoglycans), modified polysaccharides -preferably among modified starch ethers-, polyvinylic alcohols, polyacrylamides, clays, sepiolites, bentonites, and their mixes, and more preferably chosen in the group of clays, bentonite, montmorillonite.

### DefoamerlAntifoams

The possible defoamer is preferably chosen in the group comprising, more preferably consisting in: polyether polyols,diphenyl oxides sulfonates, acetylene diols, amines and mixes thereof.

### Biocide

The possible biocide is preferably chosen in the group comprising, more preferably consisting in: mineral oxides like zinc oxide and mixes thereof.

### Pigment

The possible pigment is preferably chosen in the group comprising, more preferably consisting in: TiO₂, iron oxide and mixes thereof.

### Flame retardant

The possible flame retardant (or flame proof agent), which makes it possible to increase the fire resistance and/or to shrink the speed of flame spreading of the composition is preferably chosen in the group comprising, more preferably consisting in:
- minerals preferably aluminium hydroxide [Al(OH)₃, ATH], magnesium hydroxide MDH, hydromagnesite, hydrates, red phosphorus, and boron compounds, preferably borates,
- organohalogen compounds, preferably organochlorines and more preferably such as chlorendic acid derivatives and chlorinated paraffins; organobromines such as decabromodiphenyl ether (decaBDE), decabromodiphenyl ethane,
- polymeric brominated compounds preferably brominated polystyrenes, brominated carbonate oligomers (BCO's), brominated epoxy oligomers (BEO's), tetrabromophthalic anyhydride, Tetrabromobisphenol A(TBBPA) and hexabromocyclododecane (HBCD),
- antimony preferably pentoxide and sodium antimonite,
- organophosphorus compounds preferably organophosphate, TPP, RDP, BPADP, tri-o-cresyl phosphate,
- phosphonates preferably DMMP and phosphinates,
- chlorophosphates like TMCP and TDCP.

### Air-entraining agents

Air-entraining agents (surfactants) are advantageously chosen in the group comprsing, more preferably consisting in, natural resins, sulfated or sulfonated compounds, synthetic detergents, organic fatty acids, betaïns and their mixes, preferably in the group comprising, more preferably consisting in, the lignosulfonates, the basic soaps of fatty acids and their mixes, and, more preferably in the group comprising, more preferably consisting in the sulfonate olefins, the sodium lauryl sulfate and their mixes.

### Retarders

Retarders are advantageously chosen in the group, more preferably consisting in tartaric acid and its salts: sodium or potassium salts, citric acid and its salts: sodium (trisodium citrate), sodium gluconate, sodium glucoheptonate tartrates and their mixes;
- *Fibres*
- *Dispersion powders*
- *Wetting agents*
- *Polymeric resins*
- *Complexing agents*
- *Drying shrinkage reducing agents based on polyols.*

The total content of these optional other components is preferably comprised between 0,001% and 10% by weight of the total weight of the binder fraction.

### The alkali sulfate activator (C)

Generally, the alkali sulfate activator (C) is in a form of a salt in which the counter cation is sodium, potassium or lithium, but there are some anhydrites, especially the very soluble ones, that can lead to a high and fast presence of soluble sulfate in the poral solution, leading to the same rheology problems, as in presence of alkali sulfate salts. These anhydrites (mainly thermal ones) are characterized by high conductivity, high pH and high zeta potential. In the sense of the invention, the alkali sulfate activator (C) includes anhydrites which lead to a pH of at least 10 when solubilized in water at a concentration of 10g/L

In general, in the wet ready-mix concrete or mortar composition, or wet precast concrete composition according to the invention, the weight ratio C/B of said alkali sulfate activator (C) to the binder composition (B) is comprised between 0.001 and 0.15.

### The water (D)

Advantageously, the weight ratio water to hydraulic binder composition (D/B) is comprised between 0.08 and 1.0, preferably between 0.25 and 0.9, and more preferably selected in the group comprising -advantageously consisting in- the following ranges: [0.25 ; 0.35[ ; [0.35 ; 0.45[ ; [0.45 ; 0.6[ ; [0.6 ; 0.9].

### The water reducing polymer (E)

According to the invention, the water reducing polymer (E) is a copolymer comprising the following monomeric units:
- units A 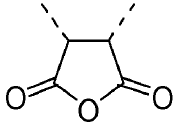
- units B 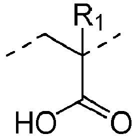
- units C 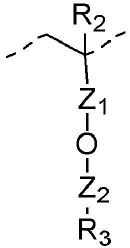
- units D 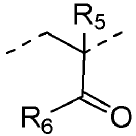
   wherein: - - - represents a bonding site of a monomeric unit
   the quantity of monomeric units A is between 0 and 40 mol%,
   the quantity of monomeric units B is between 25 and 95 mol%,
   the quantity of monomeric units C is between 5 and 50 mol%,
   the quantity of monomeric units D is between 0 and 25 mol%,
   R₁ and R₂ are independently hydrogen or methyl,
   Z₁ is a bond, a methyl or an ethyl,
   Z₂ is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S.

In an embodiment, the sum of the quantity of monomeric units A, the quantity of monomeric units B, the quantity of monomeric units C, the quantity of monomeric units D is equal to 100 mol%.

In another embodiment, the water reducing polymer (E) comprise at least another monomeric units in a quantity of up to 20 mol%. Preferably, the at least another monomeric units results from the polymerization of any unsaturated monomer which can be copolymerized with any of the monomers contained in the PCE in the proviso that the resulting polymer cannot be ViscoCrete^{®} Tempo 12 manufactured by Sika^{®}.

Preferably, the quantity of monomeric units A is between 5 and 35 mol%, more preferably between 10 and 30 mol% and even more preferably between 15 and 25 mol%.

Preferably, the quantity of monomeric units B is between 25 and 95 mol%, more preferably between 35 and 80 mol% and even more preferably between 45 and 65 mol%.

Preferably, the quantity of monomeric units C is between 5 and 50 mol%, more preferably between 15 and 40 mol% and even more preferably between 20 and 30 mol%.

Preferably, the quantity of monomeric units D is between 0 and 25 mol%, more preferably between 5 and 20 mol% and even more preferably between 10 and 15 mol%.

In embodiments wherein the water reducing polymer (E) comprises phosphate functions, at least a part of the unities derived from a carboxylic acid monomer are substituted with a phosphate.

In embodiments wherein the water reducing polymer (E) comprises phosphonate functions, at least a part of the unities derived from a carboxylic acid monomer are substituted with a phosphonate.

Preferably, the water reducing polymer is anionic, cationic or zwitterionic.

Preferably, the water reducing polymer has a molecular weight by weight comprised between 5 000 g.mol⁻¹ and 300000 g.mol⁻¹.

Preferably, the content of water reducing polymer is comprised between 0.05 and 3% by weight of binder composition (B).

In an embodiment the water reducing polymer (E) is a HPEG. HPEG are copolymers derived from (meth)acrylic acid, itaconic acid monomers and from ω-hydroxy-α-methallyl poly(ethylene glycol) macromonomers or ω-methoxy-α-methallyl poly(ethylene glycol).

In this embodiment, the water reducing polymer (E) is a copolymer comprising the following monomeric units:
- units B 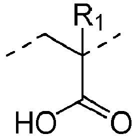
- units C 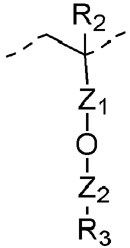
- units D 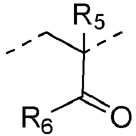
   wherein: - - - represents a bonding site of a monomeric unit
   the quantity of monomeric units B is between 25 and 95 mol%,
   the quantity of monomeric units C is between 5 and 50 mol%,
   the quantity of monomeric units D is between 0 and 25 mol%,
   R₁ is hydrogen or methyl,
   R2 is hydrogen
   Z₁ is a methyl,
   Z2 is a bond,
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen or methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S.

In this embodiment, preferably, the quantity of monomeric units B is between 25 and 95 mol%, more preferably between 35 and 80 mol% and even more preferably between 45 and 65 mol%, the quantity of monomeric units C is between 5 and 50 mol%, more preferably between 15 and 40 mol% and even more preferably between 20 and 30 mol% and, the quantity of monomeric units D is between 1 and 25 mol%, more preferably between 5 and 20 mol% and even more preferably between 10 and 15 mol%.

In another embodiment, the water reducing polymer (E) is an APEG. APEG are block copolymer of A-B-A-B type, wherein A unities are derived from maleic acid monomers and B unities are derived from ω-hydroxy-α-allyl poly(ethylene glycol) macromonomers.

In this embodiment, the water reducing polymer (E) is a copolymer comprising the following monomeric units:
- units A 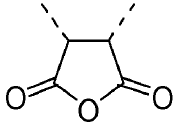
- units B 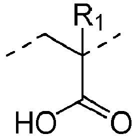
- units C 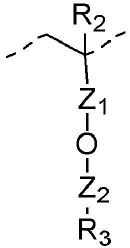
- units D 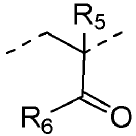 wherein: - - - represents a bonding site of a monomeric unit
   the quantity of monomeric units A is between 0 and 40 mol%,
   the quantity of monomeric units B is between 25 and 95 mol%,
   the quantity of monomeric units C is between 5 and 50 mol%,
   the quantity of monomeric units D is between 0 and 25 mol%,
   R₁ is hydrogen or methyl,
   R2 is hydrogen
   Z₁ is a methyl,
   Z₂ is a bond,
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S.

In this embodiment, preferably, the quantity of monomeric units A is between 5 and 35 mol%, more preferably between 10 and 30 mol% and even more preferably between 15 and 25 mol%, preferably, the quantity of monomeric units B is between 25 and 95 mol%, more preferably between 35 and 80 mol% and even more preferably between 45 and 65 mol%, the quantity of monomeric units C is between 5 and 50 mol%, more preferably between 15 and 40 mol% and even more preferably between 20 and 30 mol% and, the quantity of monomeric units D is between 1 and 25 mol%, more preferably between 5 and 20 mol% and even more preferably between 10 and 15 mol%.

In another embodiment, the water reducing polymer (E) is a VPEG. VPEG are vinyl etherbased PCEs.

In this embodiment, the water reducing polymer (E) is a copolymer comprising the following monomeric units:
- units B 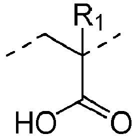
- units C 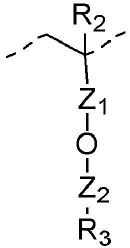
- units D 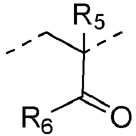
   wherein: - - - represents a bonding site of a monomeric unit
   the quantity of monomeric units B is between 25 and 95 mol%,
   the quantity of monomeric units C is between 5 and 50 mol%,
   the quantity of monomeric units D is between 0 and 25 mol%,
   R₁ is hydrogen or methyl,
   R₂ is hydrogen
   Z₁ is a bond,
   Z₂ is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S.

In this embodiment, preferably, the quantity of monomeric units B is between 25 and 95 mol%, more preferably between 35 and 80 mol% and even more preferably between 45 and 65 mol%, the quantity of monomeric units C is between 5 and 50 mol%, more preferably between 15 and 40 mol% and even more preferably between 20 and 30 mol% and, the quantity of monomeric units D is between 1 and 25 mol%, more preferably between 5 and 20 mol% and even more preferably between 10 and 15 mol%.

In another embodiment, the water reducing polymer (E) is an IPEG. IPEG are copolymers derived from acrylic acid monomers and from isoprenol poly(ethylene glycol) macromonomers.

In this embodiment, the water reducing polymer (E) is a copolymer comprising the following monomeric units:
- units B 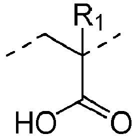
- units C 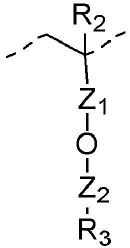
- units D 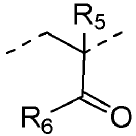
   wherein: - - - represents a bonding site of a monomeric unit
   the quantity of monomeric units B is between 25 and 95 mol%,
   the quantity of monomeric units C is between 5 and 50 mol%,
   the quantity of monomeric units D is between 0 and 25 mol%,
   R₁ is hydrogen or methyl,
   R2 is hydrogen
   Z₁ is an ethyl,
   Z2 is a bond,
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen or methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S.

In this embodiment, preferably, the quantity of monomeric units B is between 25 and 95 mol%, more preferably between 35 and 80 mol% and even more preferably between 45 and 65 mol%, the quantity of monomeric units C is between 5 and 50 mol%, more preferably between 15 and 40 mol% and even more preferably between 20 and 30 mol% and, the quantity of monomeric units D is between 1 and 25 mol%, more preferably between 5 and 20 mol% and even more preferably between 10 and 15 mol%.

### The process for preparing wet concrete or wet mortar composition

The invention also concerns a process for preparing wet concrete or wet mortar composition classified in one of the slump flow classes S3, S4 and S5 according to standard NF EN 206, comprising a step of introducing in a mixing chamber, simultaneously or not, separately or not:
at least one aggregate (A),
a binder composition (B),
at least one alkali sulfate activator (C),
water (D) and
at least one water reducing polymer (E),
wherein the binder composition (B) comprises:
   (b1) Ground Granulated Blast Furnace Slag (GGBS),
   (b2) optionally at least one hydraulic binder other than GGBS, according to standard EN 197-1 and EN 197-5,
   (b3) optionally one or more supplementary cementitious materials, and
   (b4) optionally one or more filler materials,
wherein the water reducing polymer (E) is a copolymer comprising the following monomeric units:
   - units A 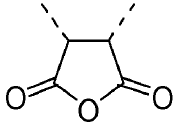
   - units B 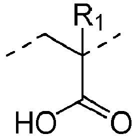
   - units C 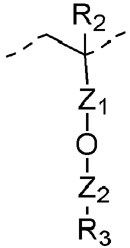
   - units D 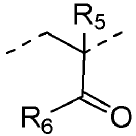
      wherein: - - - represents a bonding site of a monomeric unit
      the quantity of monomeric units A is between 0 and 40 mol%,
      the quantity of monomeric units B is between 25 and 95 mol%,
      the quantity of monomeric units C is between 5 and 50 mol%,
      the quantity of monomeric units D is between 0 and 25 mol%,
      R₁ and R₂ are independently hydrogen or methyl,
      Z₁ is a bond, a methyl or an ethyl,
      Z₂ is a bond, -CH₂CH₂O-, -CH₂CH₂OCH₂CH₂O- or -CH₂CH₂CH₂CH₂O-
      R₃ is -(CH₂CH₂O)ₘ-R₄, -(CH(CH₃)CH₂O)ₙ-R₄ or -(CH₂CH₂OCH(CH₃)CH₂O)_{y}-R₄
      m, n and y being an integer independently comprised between 7 and 100,
      R₄ is hydrogen, methyl,
      R₅ is hydrogen, methyl or -CH₂COOH, and
      R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
      R₇ being a saturated or unsaturated, linear or branched chain comprising from 2 to 12 carbon atoms and eventually one or more heteroatoms, preferably O, N or S, and wherein said wet concrete or wet industrial mortar composition remains classified in the same slump flow class during at least 2 hours after the having introduce all the quantities of A, B, C , D and E in the mixing chamber.

The components of wet concrete or wet mortar composition classified in one of the slump flow classes S3, S4 and S5 according to standard NF EN 206 obtained with the process according to the invention have the same features than the ones described in the above part "the ready-mix concrete or mortar, or precast concrete composition".

In particular, in the process according to the invention, the water reducing polymer (E) is anionic, cationic or zwitterionic.

In particular, in the process according to the invention, the weight ratio C/B of said alkali sulfate activator (C) to the binder composition (B) is comprised between 0.001 and 0.15.

In particular, in the process according to the invention, the supplementary cementitious material (b3) is selected from the group consisting of fly ash, mechanically or thermally activated clay, silica fume, natural pozzolanic materials, rice husk ash, or a mixtures thereof and/or wherein the filler material (b4) is selected from the group consisting of ground limestone, ground dolomite, marble powder, siliceous sands, recycled concrete fine aggregates or a mixture thereof.

### The method for maintaining a wet concrete or wet industrial mortar composition in a single slump flow class, measured according to EN 12350-2, as described in standard NF EN 206, during at least 2 hours

The invention further concerns a method for maintaining a wet concrete or wet industrial mortar composition in a single slump flow class according to standard NF EN 206, during a time period of at least 2 hours, said composition comprising at least one aggregate (A), a binder composition (B), at least one alkali sulfate activator (C), water (D) and at least one water reducing polymer (E), wherein the binder composition (B) comprises:
(b1) Ground Granulated Blast Furnace Slag (GGBS),
(b2) optionally at least one hydraulic binder other than GGBS, according to standard EN 197-1 and EN 197-5,
(b3) optionally one or more supplementary cementitious materials, and
(b4) optionally one or more filler materials,
wherein the water reducing polymer (E)) is a copolymer comprising the following monomeric units:
- units A 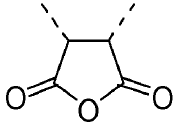
- units B 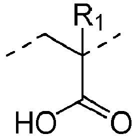
- units C 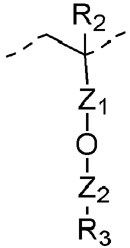
- units D 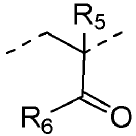
   wherein: - - - represents a bonding site of a monomeric unit
   the quantity of monomeric units A is between 0 and 40 mol%,
   the quantity of monomeric units B is between 25 and 95 mol%,
   the quantity of monomeric units C is between 5 and 50 mol%,
   the quantity of monomeric units D is between 0 and 25 mol%,
   R₁ and R₂ are independently hydrogen or methyl,
   Z₁ is a bond, a methyl or an ethyl,
   Z₂ is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S,
   wherein the time period of at least 2 hours begins when all the quantities of A, B, C , D and E have been introduced in a mixing chamber, and
   wherein the single slump flow class is S3, S4 or S5.

The components of wet concrete or wet mortar composition classified in one of the slump flow classes S3, S4 and S5 according to standard NF EN 206 to which the method according to the invention is applied, have the same features than the ones described in the above part "the ready-mix concrete or mortar, or precast concrete composition".

In particular, in the method according to the invention, the water reducing polymer (E) is anionic, cationic or zwitterionic.

In particular, in the method according to the invention, the weight ratio C/B of said alkali sulfate activator (C) to the binder composition (B) is comprised between 0.001 and 0.15.

In particular, in the method according to the invention, the supplementary cementitious material (b3) is selected from the group consisting of fly ash, mechanically or thermally activated clay, silica fume, natural pozzolanic materials, rice husk ash, or a mixtures thereof and/or wherein the filler material (b4) is selected from the group consisting of ground limestone, ground dolomite, marble powder, siliceous sands, recycled concrete fine aggregates or a mixture thereof.

### Examples

### Composition and trials on concrete:

Main parameters of casted concretes are listed below:
- Granular skeleton optimized with 5 aggregates size range (Dmax = 20mm)
- 350 kg/m³ of CEM III/B (70% GGBS + 30% CEM I)
- Water-to-binder ratio equals to 0.45 (considering water absorption from aggregates)
- addition of Na₂SO₄ as a hardening accelerator at 1.5%wt of binder content
- Concretes were casted and cured according to standard NF EN 12390-2.

Slump tests were realized with an Abrams cone according to standard NF EN 12350-2. Slump was monitored for up to 1h30 by doing a trial every 30 minutes. Before each new trial, concrete was mixed for 30 seconds.

Compressive strength trials were realized according to standard NF EN 12390-3 on cubic moulds (10×10×10 cm³). Compressive strength results were the average value obtained by crushing three cubic samples par age of test.

### Composition and trials on mortars:

The aggregate used in mortar production was a normalized quartz sand conformed to NF EN 196-1 with particle size ranging between 0 and 2 mm. The mass of binder (cement+GGBS) was kept constant at 550 g. Granular-to-sand ratio and water-to-binder ratio were respectively set at 2.45 and 0.35. Mixing procedure followed NF EN 196-1.

Comparative slump tests were carried out with a cone of which all the proportions correspond to half of an Abrams cone according to NF EN 12350-2. As for concrete procedure, mortar was filled into the cone in three equivalent layers. Each layer was compacted with 25 strokes of a compacting rod. Slump tests were repeated on the same mortar every 30 minutes to evaluate its open time. Before each new slump trial, mortar was mixed 30 seconds at high speed with a planetary mixer according to NF EN 196-1. As soon as a slump test was finished, mortar was reintroduced in its mixing bowl, covered with a humid cloth.

For compressive strength trials, mortars were casted in 4x4x16 cm³ metallic moulds. A press with a contact surface of 40x40 mm² was used, at a loading speed of 2.4 kN/s. Results were the mean of three values.

### Examples of Tests with HPEG

Example 1 (improved initial fluidity)- Tests on CEN mortars based with 0 and 1% Na₂SO₄ (w/b 0,4).

### Composition:

- 450g Binder including: 45% GGBS-35% OPC- 20% Limestone filler
- 1350 g CEN sand
- 0-1% Na₂SO₄

### Water reducing polymer: 0,06-0,45 % on binder

HPEG behaviour was tested on a composition like the new CEM VI (as in EN 197-5) formula in comparison with a traditional PCE ViscoCrete^{®} Tempo 12 manufactured by Sika^{®}.

HPEG product is more efficient to disperse the system (requires less for the same rheological properties).

HPEG did not influence the compressive strength at early age at this percentage, whereas, ViscoCrete^{®} Tempo 12 has a deleterious impact as shown in figure 1.

| Binder | Na₂SO₄ | w/b | HPEG RB 1050 (% on binder) | PCE ViscoCrete^{®} Tempo 12 (% on binder) |
|---|---|---|---|---|
| 45% GGBS-35% OPC- 20% Limestone filler | 0 | 0.4 | 0.06 | 0 |
| 45% GGBS-35% OPC- 20% Limestone filler | 1 | 0.4 | 0.14 | 0 |
| 45% GGBS-35% OPC- 20% Limestone filler | 0 | 0.4 | 0 | 0.45 |
| 45% GGBS-35% OPC- 20% Limestone filler | 1 | 0.4 | 0 | 0.6 |

### Example 2 (improved initial fluidity)

Test in concrete on binder with 70% GGBS and 30% CEM I as binder, with ordinary PCE, by using sodium sulfate activation for initial fluidity (concrete S4 class).

In the following example: combination sodium sulfate + ordinary PCE replaced by HPEG

Composition for concrete S4 slump flow:
- 350 kg/m³ of Binder including: 70% GGBS-30% OPC
- Optimized PSD of aggregates / Dₘₐₓ = 22,5mm
- W/B ≤ 0.45
- 1.5% Na₂SO₄
- Water reducing polymer: PCE Viscocrete^{®} Tempo 12 or HPEG RB1050^{®} manufactured by Marla^{®} (dosage on binder)

Figure 2 shows results of rheology measurements, done by Abrams cone for precast application. Room temperature was higher (25-26°C) than normal lab conditions in order to simulate worse conditions for precast applications.

By adding ordinary water reducing polymers for concrete application, PCE type, like Sika Viscocrete^{®} Tempo 12, it's not possible to obtain an initial fluidity, slump 20 ± 1 cm, corresponding to S4 concrete class, despite a very high dosage (1,6% on binder), respect to ordinary application. This is due to the addition of sodium sulfate as GGBS activation that strongly deteriorates the initial fluidity.

Abram's cone measurement for ViscoCrete^{®} Tempo 12 composition was 16.5 cm at the first measurement (t0 + 9 minutes), then the concrete was held for about 30 minutes before stiffening strongly from 60 minutes. Indeed, this water reducing polymer is not particularly robust against alkali sulfates and does not allow satisfactory slump to be produced either initially or in terms of open time.

By the addition of water reducing polymer, HPEG type, like RB 1050^{®}, dosed at much lower dosage, only 0.5% on the binder, a slump at T0 + 7 minutes of 24.5 cm was obtained. RB 1050^{®} water reducing polymer based on HPEG therefore shows promise for reducing the viscosity of systems containing sodium sulfate as an activator.

No negative impact has been observed by HPEG addition on mechanical strengths (compressive strengths) measured at 2 and 28 days on concrete specimens as shown in figure 3.

### Example 3- Tests on mortars for long open time applications, like RMX applications

### Composition (T=20°C) :

- Binder including: 70% GGBS-30% OPC=550 g
- Sand EN 196-1 = 1350g
- W/B =0,35
- 1.5% Na₂SO₄
- Water reducing polymer: as set forth below

Several water reducing polymers have been tested and also combination of two, indeed it's quite common in concrete applications to combine two water reducing polymers, one for initial fluidity and one for open time.

In Figure 4 rheology results with the following water reducing polymers have been compared:
- 0.25% RB 1050^{®} (HPEG type for initial fluidity)
- 0.60% ViscoCrete^{®} Tempo 12 (PCE type for initial fluidity)
- 0.20% RB 1050^{®} + 0.10% PC 1901^{®} manufactured by Marla (HPEG type for longer workability)
- 0.15% RB 1050^{®} + 0.20% PC 1901^{®}
- 0.15% RB 1050^{®} + 0.30% TempoFlow^{®} 464 manufactured by Sika^{®} (PCE type for longer workability)

The mortar with ViscoCrete^{®} Tempo 12 is the one for which the spread decreases the less over two hours, however, the average spread obtained is too low for a corresponding S4 type flowable concrete.

The initially most fluid mortar is the one admixed with 0.25% of RB 1050^{®}, alone. A slight bleeding appeared at the beginning, so the dosage, already much lower than ViscoCrete^{®} Tempo 12 can be still reduced. On the other hand, this mixture does not offer good rheology maintenance with a strong reduction in the spreading values between 30 and 60 minutes, going from 350mm to 270mm, then to 150mm at 90 minutes.

As shown in figure 4, the combination of RB 1050^{®} and PC 1901^{®} enables to have a good initial fluidity and it improves the open time (empty circle curve). Although, the mortar comprising a combination of PC 1901^{®} and RB 1050^{®} presents a lower initial spread than the mortar comprising on RB 1050 but no PC 1901, the spread is less decreased over time, what confer a longer open-time, (empty circle vs. plain disc).

The combination of 0.15% RB 1050^{®} + 0.30% Tempoflow^{®} 464 also failed to achieve spread maintenance; this confirms that it is not effective when alkali sulfates are used.

A second series of tests was carried out by focusing on HPEG Marla water reducing polymers combination: RB1050^{®} for initial fluidity and PC 1901^{®} for maintenance.

Figure 5 shows the Abrams mini-cone on mortars based on binder including: 70% GGBS-30% OPC with the addition of 1.5% Na₂SO₄ and added by the following different combinations of water reducing polymers:
- 0.20% RB 1050^{®} + 0.10% PC 1901^{®} (from the first series of tests-figure 4)
- 0.20% RB 1050^{®} + 0.15% PC 1901^{®}
- 0.20% RB 1050^{®} + 0.20% PC 1901^{®}

It has been observed that for the same quantity of RB 1050^{®}, an increase in the quantity of PC 1901^{®} actually made it possible to keep the good rheology over 2 hours of these mortars.

### Example 4- HPEG Efficacity in Sodium Sulfate activated in Pastes

### Composition:

Pastes were prepared with binder based on:
25% GGBS
15% CEM I
30% SCM pozzolane
30% of two fillers: 20% Durcal^{®} 65, 10% Betocarb^{®} F-SL,

The water-powder ratio used was 0.40, chosen to exaggerate any differences in rheology and for being in worse rheological conditions.
- Sodium sulfate = 0% or 2% bwp (weight percentage on binder)
- Water reducing polymers: HPEG RB-1050^{®} and PCE Sika Viskocrete 125 P manufactured by Sika (in powder form)

### All pastes were subjected to the same testing procedure:

The powders were homogenized for 30 seconds at 200 rpm prior to adding water and water reducing polymer. Following these additions, the pastes were mixed for 30 seconds at 150 rpm and 1 minute at 650 rpm. The evolution of the rheological behaviour was followed using a mixed rheological procedure. Once placed in the rheometer, the pastes were subjected to three cycles of varying shear rate from 0.1s-1 to 100s-1. Between each measurements of a flow sweep, there was 20 min of small amplitude oscillatory test as a non-destructive method. When presented here, apparent viscosity is measured between two last points of shear rate and yield stress at a shear rate of 0.1s-1. The entire test lasts approximately 60 minutes.

In terms of yield stress (Figure 6), the HPEG RB-1050^{®} showed less changes in yield stress due to the presence of the sodium sulfate between time zero and after 60 minutes. n.

## Claims

1. A wet ready-mix concrete or mortar composition, or wet precast concrete composition, devoted in particular to building construction and civil engineering works, comprising at least one aggregate (A), a binder composition (B), at least one alkali and/or earth alkali sulfate activator (C), water (D) and at least one water reducing polymer (E), wherein the binder composition (B) comprises:
(b5) Ground Granulated Blast Furnace Slag (GGBS),
(b6) optionally at least one hydraulic binder other than GGBS, according to standard EN 197-1 and EN 197-5,
(b7) optionally one or more supplementary cementitious materials, and
(b8) optionally one or more filler materials,
wherein said wet ready-mix concrete or mortar composition, or wet precast concrete composition is classified in one of the slump flow classes S3, S4 and S5 according to standard NF EN 206, and wherein the water reducing polymer (E) is a copolymer comprising the following monomeric units:
- units A 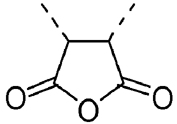
- units B 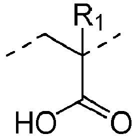
- units C 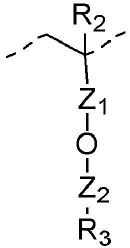
- units D 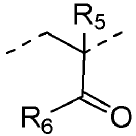 wherein: - - - represents a bonding site of a monomeric unit
the quantity of monomeric units A is between 0 and 40 mol%,
the quantity of monomeric units B is between 25 and 95 mol%,
the quantity of monomeric units C is between 5 and 50 mol%,
the quantity of monomeric units D is between 0 and 25 mol%,
R₁ and R₂ are independently hydrogen or methyl,
Z₁ is a bond, a methyl or an ethyl,
Z₂ is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.

2. The wet ready-mix concrete or mortar composition according to claim 1, wherein said wet concrete or wet industrial mortar composition remains classified in the same slump flow class during at least 2 hours after having added all the quantities of the water (D).

3. The wet ready-mix concrete or mortar composition , or wet precast concrete composition according to any one of claims 1 and 2, wherein the water reducing polymer is anionic, cationic or zwitterionic.

4. The wet ready-mix concrete or mortar composition, or wet precast concrete composition according to any one of claims 1 to 3, wherein the weight ratio C/B of said alkali sulfate activator (C) to the binder composition (B) is comprised between 0.001 and 0.15.

5. The wet ready-mix concrete or mortar compostion, or wet precast concrete composition according to any one of claims 1 to 4, wherein the supplementary cementitious material (b3) is selected from the group consisting of fly ash, mechanically or thermally activated clay, silica fume, natural pozzolanic materials, rice husk ash, or a mixtures thereof and/or wherein the filler material (b4) is selected from the group consisting of ground limestone, ground dolomite, marble powder, siliceous sands, recycled concrete fine aggregates or a mixture thereof.

6. Hardened concrete or mortar obtained from the wet ready-mix concrete or mortar composition, or wet precast concrete composition according to any one of claims 1 to 5.

7. Process for preparing wet concrete or wet mortar composition classified in one of the slump flow classes S3, S4 and S5 according to standard NF EN 206, comprising a step of introducing in a mixing chamber, simultaneously or not, separately or not:
at least one aggregate (A),
a binder composition (B),
at least one alkali sulfate activator (C),
water (D) and
at least one water reducing polymer (E),
wherein the binder composition (B) comprises:
(b5) Ground Granulated Blast Furnace Slag (GGBS),
(b6) optionally at least one hydraulic binder other than GGBS, according to standard EN 197-1 and EN 197-5,
(b7) optionally one or more supplementary cementitious materials, and
(b8) optionally one or more filler materials,
wherein the water reducing polymer (E)
is a copolymer comprising the following monomeric units:
- units A 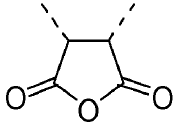
- units B 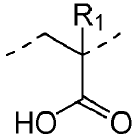
- units C 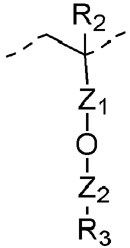
- units D 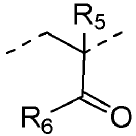 wherein: - - - represents a bonding site of a monomeric unit
the quantity of monomeric units A is between 0 and 40 mol%,
the quantity of monomeric units B is between 25 and 95 mol%,
the quantity of monomeric units C is between 5 and 50 mol%,
the quantity of monomeric units D is between 0 and 25 mol%,
R₁ and R₂ are independently hydrogen or methyl,
Z₁ is a bond, a methyl or an ethyl,
Z₂ is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S, and
wherein said wet concrete or wet industrial mortar composition remains classified in the same slump flow class during at least 2 hours after the having introduce all the quantities of A, B, C , D and E in the mixing chamber.

8. The process according to claim 7, wherein the water reducing polymer is anionic, cationic or zwitterionic.

9. The process according to any one of claims 7 and 8, wherein the weight ratio C/B of said alkali sulfate activator (C) to the binder composition (B) is comprised between 0.001 and 0.15.

10. The process according to any one of claims 7 to 9, wherein the supplementary cementitious material (b3) is selected from the group consisting of fly ash, mechanically or thermally activated clay, silica fume, natural pozzolanic materials, rice husk ash, or a mixtures thereof and/or wherein the filler material (b4) is selected from the group consisting of ground limestone, ground dolomite, marble powder, siliceous sands, recycled concrete fine aggregates or a mixture thereof.

11. A method for maintaining a wet concrete composition or wet industrial mortar composition in a single slump flow class according to standard NF EN 206, during a time period of at least 2 hours, said composition comprising at least one aggregate (A), a binder composition (B), at least one alkali sulfate activator (C), water (D) and at least one water reducing polymer (E), wherein the binder composition (B) comprises:
(b1) Ground Granulated Blast Furnace Slag (GGBS),
(b2) optionally at least one hydraulic binder other than GGBS, according to standard EN 197-1 and EN 197-5,
(b3) optionally one or more supplementary cementitious materials, and
(b4) optionally one or more filler materials,
wherein the water reducing polymer (E) is a copolymer comprising the following monomeric units:
- units A 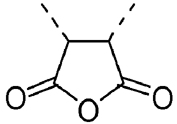
- units B 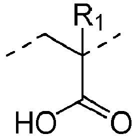
- units C 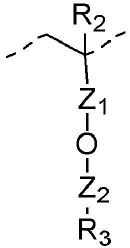
- units D 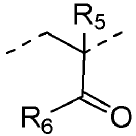
wherein: - - - represents a bonding site of a monomeric unit
the quantity of monomeric units A is between 0 and 40 mol%,
the quantity of monomeric units B is between 25 and 95 mol%,
the quantity of monomeric units C is between 5 and 50 mol%,
the quantity of monomeric units D is between 0 and 25 mol%,
R₁ and R₂ are independently hydrogen or methyl,
Z₁ is a bond, a methyl or an ethyl,
Z₂ is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S,
wherein the time period of at least 2 hours begins when all the quantities of A, B, C , D and E have been introduced in a mixing chamber, and
wherein the single slump flow class is S3, S4 or S5.

12. The method according to claim 11, wherein the water reducing polymer is anionic, cationic or zwitterionic.

13. The method according to any one of claims 11 and 12, wherein the weight ratio C/B of said alkali sulfate activator (C) to the binder composition (B) is comprised between 0.001 and 0.15.

14. The method according to any one of claims 11 to 13, wherein the supplementary cementitious material (b3) is selected from the group consisting of fly ash, mechanically or thermally activated clay, silica fume, natural pozzolanic materials, rice husk ash, activated recycled concrete fine aggregates or a mixtures thereof and/or wherein the filler material (b4) is selected from the group consisting of ground limestone, ground dolomite, marble powder, siliceous sands, recycled concrete fine aggregates or a mixture thereof.

15. A method for providing a hardened low carbon GGBS containing binder-based concrete or mortar composition,
an early-age compressive strength value,
comparable with the one of a hardened 100% OPC binder-based concrete or mortar composition; wherein a wet precursor P1 of the low carbon GGBS containing binder-based concrete or mortar composition comprises at least one aggregate (A), a binder composition (B), at least one alkali sulfate activator (C), water (D) and at least one water reducing polymer (E),
wherein the binder composition (B) comprises:
(b1) Ground Granulated Blast Furnace Slag (GGBS),
(b2) optionally at least one hydraulic binder other than GGBS, according to standard EN 197-1 and EN 197-5,
(b3) optionally one or more supplementary cementitious materials, and
(b4) optionally one or more filler materials,
wherein said wet precursor P1 is classified in one of the slump flow classes S3, S4 and S5 according to standard NF EN 206, and,
wherein said wet P1 remains classified in the same slump flow class during at least 2 hours after after having introduced in a mixing chamber all the quantities of the components A, B, C, D and E wherein a wet precursor P2 of the 100% OPC binder-based concrete or mortar composition comprises the same components (A), (D), (E) as P1, the same concentrations of (A), 100% OPC ,(D) and (E) as (A), (B) ,(D) and (E) of P1, and the same ratio C/100% OPC binder as the ratio C/B of P1 ;
said method consisting in using a water reducing polymer (E) is a copolymer comprising the following monomeric units:
- units A 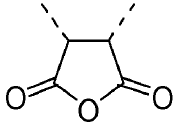
- units B 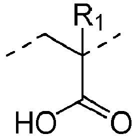
- units C 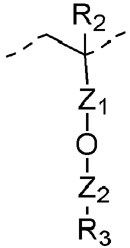
- units D 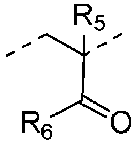 wherein: - - - represents a bonding site of a monomeric unit
the quantity of monomeric units A is between 0 and 40 mol%,
the quantity of monomeric units B is between 25 and 95 mol%,
the quantity of monomeric units C is between 5 and 50 mol%,
the quantity of monomeric units D is between 0 and 25 mol%,
R₁ and R₂ are independently hydrogen or methyl,
Z₁ is a bond, a methyl or an ethyl,
Z₂ is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.
